Europäisches Patentamt

European Patent Office

Office européen des brevets

(11) Publication number: **0 175 342**
A2

# EUROPEAN PATENT APPLICATION

(21) Application number: 85111733.3

(51) Int. Cl.⁴: **G 09 G 1/16**

(22) Date of filing: **17.09.85**

(30) Priority: **17.09.84 US 650942**

(71) Applicant: **Honeywell Information Systems Inc.,
Honeywell Plaza, Minneapolis Minnesota 55408 (US)**

(72) Inventor: **Murray, Thomas L., 58 Cameron Dr., Hollis,
NH 03049 (US)**
Inventor: **Holtey, Thomas O., 10 Crehore Dr., Newton,
MA 02162 (US)**
Inventor: **Bruce, Kenneth E., 14 Terry St., Nashua,
NH 03060 (US)**

(43) Date of publication of application: **26.03.86
Bulletin 86/13**

(74) Representative: **Bardehle, Heinz, Dipl.-Ing. et al, Patent-
und Rechtsanwälte
Bardehle-Pagenberg-Dost-Altenburg & Partner
Postfach 86 06 20, D-8000 München 86 (DE)**

(84) Designated Contracting States: **AT BE CH DE FR GB IT
LI NL SE**

(54) **Mixing of line drawings and text in a CRT display system.**

(57) The invention pertains to a method and hardware for
adding graphics capability to an existing alphanumeric
computer system by providing graphics generation logic to
existing alphanumeric generation logic and mixing and synchronizing the graphics data to the normal text display data.

-1-

## BACKGROUND OF THE INVENTION

### 1.   Field of the Invention

This invention relates generally to a line drawing and text display capability in a data processing system, and more particularly to a method and hardware apparatus for permitting the mixing of text and line drawings, such as graphs, flowcharts, schematic drawings, etc.

### 2.   Description of the Prior Art

State-of-the-art computer systems have the capability to display not only text, but simple line drawings, such as graphs, flowcharts, schematic drawings, etc. The logic of this graphics generation capability is an integral part of the logic for the text generation capability. Accordingly a purchaser of a computer system having only the text generation logic must remove this text generation logic and replace it with the combination text and graphics generation logic in order to obtain the combined text/graphics capability. This technique leaves the purchaser with a surplus text generation logic board. It is desirable, therefore, to have a system where the text generation logic remains in the host computer and the graphics capability is added by merely supplying the graphics logic board. What is needed, therefore, is a method and hardware to permit the mixing and synchronization of graphics data to the normal text display data available in prior art computer systems.

### OBJECTS OF THE INVENTION

It is a primary object of the invention to have an improved combined graphics and alphanumeric display system.

It is a further object of the invention to have an improved graphics display system having means for mixing and synchronizing graphics data to the existing text display data.

It is still a further object of the invention to provide a method and hardware for adding graphics capability to the existing alphanumeric display system.

## SUMMARY OF THE INVENTION

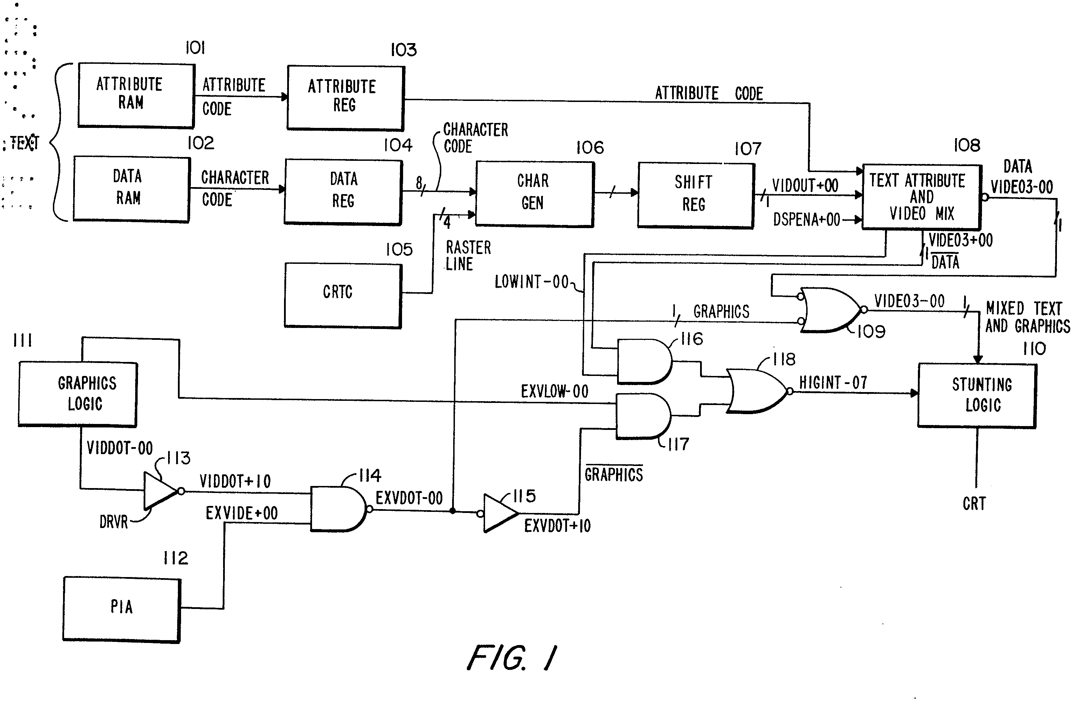

The instant invention discloses a method and hardware for adding graphics capability to the existing alphanumeric capability by providing graphics generation logic to an existing text generation logic and mixing and synchronizing the graphics data to the normal text display data. Referring to Figure 1, this is accomplished by a method and hardware, basically comprising negative OR gate 109, AND gates 116 and 117, and NOR gate 118, for generating a video signal from the graphics option and ORing it with the video signal generated from the existing text generating logic so as to superimpose text and graphics on the CRT in a monochromatic display tube.

## BRIEF DESCRIPTION OF THE DRAWING

The novel features which are characteristic of the invention are set forth with particularity in the appended claims. The invention itself, both as to organization and operation, may best be understood by reference to the following description in conjunction with the following drawing:

Figure 1 is a logic block diagram of the invention.

## DESCRIPTION OF A PREFERRED EMBODIMENT

Referring to Figure 1, there is shown a logic block diagram of the invention. Figure 1 will be described by first discussing the character generating logic and then the graphics generating logic, and how the graphics generating logic is combined with the character generating logic to produce superimposed or independent images of characters and graphics. Synchronization of the text is accomplished by use of display enable signal DSPENA-00 from character generator 106 coupled to graphics logic 111.

Data RAM 102 is a random access memory which stores codes of characters in the order in which they will be displayed on a cathode ray tube (CRT not shown). Attribute RAM 101 is a random access memory for storing attribute codes which indicate special functions to be performed on selected characters in RAM 102. For example, in order to highlight a word it may be desirable to cause that word to "blink" on the CRT, or to be underlined, or to be accentuated. This is accomplished by associating a like address in Attribute RAM 101 having a special attribute code which can be associated with selected characters stored in data RAM 102. The character codes stored in RAM 102 serve as an address for addressing information in character generator 106 via data register 104. Accordingly the selected character code read out from data RAM 102 is stored in data register 104. If it is desired to associate an attribute code to the particular character selected from data RAM 102, the output from the attribute RAM 101 is then stored in attribute register 103. The character code stored in data register 104 is an 8 bit code, and accordingly up to 64 different characters can be generated in character generator 106 by addressing the particular location in the character generator which stores the selected character information. Each character that is generated requires 7 horizontal pixels and 9 vertical pixels to be fully described, or a total of 72 pixels. This 7X9 matrix is within a 9x12 matrix to provide for character and row spaces. Each character is generated in slices (portions) as each horizontal line is scanned across a CRT. To make a complete line of portions of characters, sequential addresses representing characters that are to appear in sequence are selected from data RAM 102 and sequentially stored in register 104 which sequentially addresses the character information in character generator 106. To generate a full row of characters, 12 scan lines are required, although another number such as 9 could be utilized. Accordingly the cathode ray tube controller (CRTC) 105 generates 4 raster signals which are sufficient to select up to 16 raster scan lines--more than enough than the 12 lines required for each character. As each succeeding raster scan line is selected and proceeds across the screen, additional portions of each character sequentially addressed are filled in. However the character generator 106 generates only portions of each character which are addressed as each scan line proceeds across the screen until the completion of the two last scan lines whereby all the characters selected appear on the screen. The output of character generator 106 is applied to shift register 107 as each character is addressed during each scan line. These are the bits to be displayed on the screen for text for a particular portion of a raster line and are indicated by video out signal VIDOUT+00. The VIDOUT+00 signal is applied to the Text Attribute and Video Mix logic 108. If there is an attribute code associated with the character to be generated, the attribute code signal is also applied to Text Attribute and Video Mix logic 108. Some of the attribute characters include high intensity, blinking, blanking, inverse functions, etc. Also applied to the Text Attribute and Video Mix logic 108 is the display enable signal DSPENA+00 (the text attribute and video mix logic is the normal logic for mixing the character generating and attribute functions and is known to the art). Accordingly when the VIDOUT+00 signal and the DSPENA+00 signal are applied to the Text Attribute and Video Mix logic 108, a VIDEO3-00 signal is generated which represents the data pulses necessary to generate that portion of a character selected for a particular scan line. If a particular attribute function also is desired, the attribute code is applied to Text Attribute and Video Mix logic 108 to provide the particular function to the character generated, such as blinking, etc. The VIDEO3-00 signal is then applied to negative OR gate 109.

In order to mix and synchronize characters and graphics, a graphic signal must be applied to the other terminal of negative AND gate 109. This is done in the following manner. The graphics logic option 111 provides an output signal VIDDOT-00 and carries the graphic pulses that will be utilized to display the graphics on the screen. The VIDDOT-00 signal is inverted in driver 113 and applied to NAND gate 114. A peripheral interface adapter PIA 112 normally controls the peripheral operation of the whole computer system; for this invention, it provides a signal EXVIDE+00 which, when high, indicates to the computer system that the graphics option is plugged in and is working. The EXVIDE+00 signal is applied to the other input terminal of NAND gate 114. Accordingly when the graphics option is plugged in, signal EXVIDE+00 is high; therefore, the output of NAND gate 114 provides an output signal EXVDOT-00 which carries the serial graphics pulses to be displayed on the CRT (not shown). The EXVDOT-00 signal is then applied to the other input terminal of negative OR gate 109; thus the two input signals, one carrying the text data and the other carrying the graphics data, are mixed in negative AND gate 109 to provide an output signal VIDEO3-0X. The VIDEO3-0X signal carries both the graphics and the text to be displayed, and they may or may not be superimposed on each other. Thus one object of the invention is accomplished.

It now remains to modify the VIDEO3-0X signal so that the intensity of the dots that are perceived by the eye of the operator appears uniform. For example, if there is only one dot appearing on the screen, it would appear very bright contrasted to a plain background even though the intensity is the same as a series of dots against the same background. The stunting logic 110 built into the text generating logic performs this function. The second portion of the invention, therefore, is to mix the graphics signal with the hardware that controls the intensity in order to provide a uniform appearance to the graphics as well as to the text. The logic for performing this is comprised of AND gates 116, 117 coupled to NOR gate 118. The Text Video signal VIDEO3+00, which is an inverted signal to the previous VIDEO3-00 signal, is applied to one terminal of AND gate 116. A low intensity signal LOWINT-00 from Text Attribute and Video Mix register 108 is applied to another terminal of AND gate 116. Accordingly if a high intensity signal is required, the low intensity signal LOWINT-00 is high. Similarly, from the graphics logic, the graphics signal EXVDOT-00 is inverted by inverter 115 to become EXVDOT+10 signal which is applied to an input terminal of AND gate 117. Additionally an attribute signal from the graphics logic indicating a low or high intensity EXVLOW-00 is applied to the second leg of AND gate 117. Accordingly, if either the text or the graphics requires a high intensity signal, the output of AND gate 116 or AND gate 117 would be high. In that case, therefore, the output of NOR gate 118 would be low generating the signal HI.INT-07. This signal is then applied to the stunting logic so that the dot represented by either the VIDEO3+00 signal or the EXVDOT+10 signal would be high, and accordingly would be bright on the screen if the high intensity signal HI.INT-07 is low. This thus is applied to the stunting logic 110 which gives an appropriate high or low intensity dot on the screen.

It will be apparent from the foregoing disclosure of the invention that numerous modifications, changes and equivalents will now occur to those skilled in the art, all of which fall within the true scope contemplated by the invention.

What is claimed is:

1. A computer display system for simultaneously displaying alphanumeric text and graphics on a cathode ray tube (CRT) comprising:

    a.) first means for generating alphanumeric text;

    b.) second means for generating graphics; and

    c.) third means coupled to said first and second means for mixing said alphanumeric text and graphics.

2. The computer display system as recited in Claim 1 including fourth means for generating attribute information for display on said CRT simultaneously with said alphanumeric text and graphics.

3. A computer display system as recited in Claim 2 wherein said first means includes a data RAM for storing the alphanumeric text to be displayed on said CRT.

4. A computer display system as recited in Claim 3 wherein said first means further includes a character generator for generating alphanumeric characters for display on said CRT.

5. A computer display system as recited in Claim 4 wherein said second means includes graphics logic for generating graphics to be displayed on said CRT.

6. A computer display system as recited in Claim 5 wherein said third means includes a negative OR gate, AND gates and NOR gate coupled to said first and second means for mixing the alphanumeric text and graphics.

7. A computer system as recited in Claim 6 including fourth means coupled to said third means for adjusting size and intensity variations of said alphanumeric text and graphics displayed on said CRT.

FIG. 1